Europäisches Patentamt

European Patent Office

Office européen des brevets

(19)

(11) Veröffentlichungsnummer: **0 330 917 B1**

# EUROPÄISCHE PATENTSCHRIFT

(12)

(45) Veröffentlichungstag der Patentschrift: **07.01.93**

(21) Anmeldenummer: **89102648.6**

(22) Anmeldetag: **16.02.89**

Die Akte enthält technische Angaben, die nach
dem Eingang der Anmeldung eingereicht wurden
und die nicht in dieser Patentschrift enthalten sind.

(51) Int. Cl.⁵: **C01B 25/235**

(54) **Kontinuierliches Verfahren zur vollständigen Entfernung organischer Verunreinigungen und vollständiger Entfärbung vorgereinigter Nassphosphorsäure.**

(30) Priorität: **03.03.88 DE 3806822**

(43) Veröffentlichungstag der Anmeldung:
**06.09.89 Patentblatt 89/36**

(45) Bekanntmachung des Hinweises auf die
Patenterteilung:
**07.01.93 Patentblatt 93/01**

(84) Benannte Vertragsstaaten:
**BE DE ES FR GB IT NL SE**

(56) Entgegenhaltungen:
**EP-A- 0 016 531      EP-A- 0 016 996
EP-A- 0 030 487      EP-A- 0 080 372
GB-A- 1 103 224      US-A- 4 643 883**

(73) Patentinhaber: **HOECHST AKTIENGESELL-
SCHAFT
Postfach 80 03 20
W-6230 Frankfurt am Main 80(DE)**

(72) Erfinder: **Schimmel, Günther, Dr.
Ehrenstrasse 16
W-5042 Erftstadt(DE)**
Erfinder: **Bettermann, Gerhard, Dr.
Geschwister-Scholl-Strasse 4a
W-5042 Erftstadt(DE)**
Erfinder: **Heymer, Gero, Dr.
Fasanenaue 12
W-5042 Erftstadt(DE)**
Erfinder: **Kolkmann, Friedrich, Dr.
Königsberger Strasse 35
W-5040 Brühl(DE)**

## Beschreibung

Die Erfindung betrifft ein kontinuierliches Verfahren zur vollständigen Entfernung organischer Verunreinigungen und vollständigen Entfärbung von vorgereinigter Naßphosphorsäure, welche durch ein Extraktionsverfahren mittels eines organischen Lösemittels gereinigt, mittels Dampfstrippung von restlicher Fluorwasserstoffsäure befreit und mit Wasserstoffperoxid bei erhöhter Temperatur behandelt wurde.

Die erfindungsgemäß hergestellte reine Phosphorsäure hat Lebensmittelqualität und keinerlei störende Färbung oder Geruchsstoffe.

Bekanntlich werden Naßphosphorsäuren durch einen Aufschluß von Phosphaterz mit Schwefelsäure erhalten. Nach Entfernung des Calciumsulfatniederschlages wird die Naßphosphorsäure durch ein Extraktionsverfahren mittels organischer Lösemittel von Schwermetallen befreit. Zur Fluorentfernung kann bei Temperaturen von 120 bis 180°C und einem Druck von etwa 1,5 bis 2,5 bar die Naßphosphorsäure mit Wasserdampf gestrippt werden.

Bei diesem Reinigungsschritt werden gleichzeitig Reste des Extraktionsmittels und ein Teil der organischen Verunreinigungen, die aus dem Phosphaterz stammen, ausgeblasen.

Bei dem Verfahren der US-A- 4.330.516 wird zur Entfernung der organischen Verunreinigungen die Naßphosphorsäure auf einen Gehalt von 50 bis 62 Gew% $P_2O_5$ konzentriert, mit Wasserstoffperoxid als Oxidationsmittel versetzt und anschließend unter Erwärmung auf wenigstens 110°C mit Pulver-Aktiv-Kohle entfärbt.

Bei dem Verfahren der US-A- 4,279,878 wird die Naßphosphorsäure zur Entfernung der organischen Verunreinigungen mit Wasserstoffperoxid in Gegenwart eines Edelmetallkatalysators und/oder eines gegenüber Phosphorsäure inerten Metalloxidkatalysators behandelt.

Die US-A- 4,539,192 beschreibt ein Verfahren zur Entfernung der organischen Verunreinigungen aus der Naßphosphorsäure in einer speziellen Vorrichtung. Bei diesem Verfahren bewirkt der bei der Zersetzung des Wasserstoffperoxids freiwerdende Sauerstoff eine Voroxidation der organischen Verunreinigung. Die so gereinigte Naßphosphorsäure enthält noch 5 bis 9 ppm organisch gebundenen Kohlenstoff und eine leichte Färbung und kann deshalb bei verschiedenen Anwendungen nicht eingesetzt werden.

Die US-A-4 643 883 beschreibt ein Verfahren zur Entfärbung von Naßphosphorsäure, bei dem Naßphosphorsäure aus einer Extraktionsreinigung in aufkonzentrierter Form mit Wasserstoffperoxid versetzt und anschließend mit Aktiv-Kohle behandelt wird. Auch diese so gereinigte Naßphosphorsäure enthält noch organisch gebundenen Kohlenstoff.

Aufgabe der vorliegenden Erfindung war es daher, ein kontinuierliches Verfahren anzugeben, das die vollständige Entfernung organischer Verunreinigungen und vollständige Entfärbung vorgereinigter Naßphosphorsäure gestattet.

Eine vollständige Entfernung organischer Verunreinigungen liegt vor, wenn weniger als 4 ppm organisch gebundener Kohlenstoff in der Naßphosphorsäure analytisch ermittelt wird. Eine vollständige Entfärbung vorgereinigter Naßphosphorsäure liegt vor, wenn die Transmission der Phosphorsäure, gemessen gegen Wasser in 5 cm Küvetten bei 365 nm, höher als 80 % ist. Der Gehalt an flüchtigen Säuren, berechnet als Essigsäure, muß laut Zusatzstoff-Verkehrsordnung vom 10.07.1984, Bundesgesetzblatt I, Nr. 30, § 897 bis 901, unter 10 ppm liegen.

Die bisher benutzte Meßanordnung zur Bestimmung der Transmission von Phosphorsäuren in 1 cm Küvetten ist bei den hier geforderten Reinheitsgraden ZU unempfindlich.

Die unerwartet große Veränderung des Zahlenwertes bei dem Gebrauch von 1 und 5 cm Küvetten ergibt sich aus dem "Lambert-Beersches-Gesetz":

$$E_1 = \mathcal{E} \cdot c \cdot l_1$$

$$E_5 = \mathcal{E} \cdot c \cdot l_5$$

$$E_1 = 1/5 \ E_5$$

$$-\log T_1 = -1/5 \ \log T_5$$

$$T_1 = \sqrt[5]{T_5}$$

$E_1$ = Extinktion in 1 cm Küvette

$E_5$ = Extinktion in 5 cm Küvette

$\mathcal{E}$ = spezifische Extinktion

c = Konzentration färbender Substanzen

$l_1$ = Länge der 1 cm Küvette

$l_5$ = Länge der 5 cm Küvette

$T_1$ = Transmission in 1 cm Küvette

$T_5$ = Transmission in 5 cm Küvette

Eine Transmission von 80 % (90 %), gemessen in einer 5 cm Küvette, entspricht somit einer Transmission von 95,6 % (97,9 %), gemessen in einer 1 cm Küvette.

Überraschenderweise wurde nun gefunden, daß sich diese Aufgabe lösen läßt, wenn man in einer Mischzone die vorgereinigte Naßphosphorsäure und das Wasserstoffperoxid bei einer Temperatur von 100 bis 200°C, vorzugsweise 140 bis 160°C, vermischt und 1 bis 4 Stunden bei dieser Temperatur nachreagieren läßt, die so behandelte vorgereinigte Naßphosphorsäure auf 85 bis 90°C abkühlt und bei dieser Temperatur unter Luftausschluß zunächst durch eine Aktiv-Kohle-Schüttung, die aus Torf hergestellt und dampfaktiviert ist und eine BET-Oberfläche von 800 bis 1000 m²/g aufweist, fördert und anschließend durch eine Siliciumcarbid- und/oder Graphit-Schüttung fördert und dabei eine Fördergeschwindigkeit von weniger als 0,5 m³/h Naßphosphorsäure je m³ Aktiv-Kohle-Schüttung eingehalten wird.

Das Verfahren gemäß der Erfindung kann weiterhin wahlweise dadurch ausgestaltet sein, daß

a) das Wasserstoffperoxid in den Saugstutzen einer Kreiselpumpe, mit welcher die Naßphosphorsäure gepumpt wird, eindosiert wird;

b) 5 bis 30 kg 30 %iges Wasserstoffperoxid pro m³ Naßphosphorsäure eindosiert werden;

c) unter 0,4 m³/h, insbesondere 0,3 bis 0,35 m³/h, Naßphosphorsäure pro m³ Aktiv-Kohle-Schüttung fließen;

d) die Aktiv-Kohle-Schüttung auf der Siliciumcarbid- und/oder Graphit-Schüttung in einem Behälter gemeinsam angeordnet ist;

e) die Aktiv-Kohle-Schüttung und Siliciumcarbid- und/oder Graphit-Schüttung zur Erzielung hoher Standzeiten mit der erfindungsgemäß gereinigten Naßphosphorsäure rückgespült werden.

Bei der Anordnung der Aktiv-Kohle- und Siliciumcarbid- und/oder Graphit-Schüttung in einem gemeinsamen Behälter mit Tragrost wird auf eine 20 bis 150 mm hohe Schüttung aus gebrochenem Siliciumcarbid und/oder Graphit mit einer Korngröße von 5 bis 12 mm eine 2000 bis 5000 mm hohe Schüttung aus Aktiv-Kohle gebracht.

Bewährt hat sich die Aktiv-Kohlequalität ® Norit ROX 0,8 der Firma Norit Adsorption GmbH, Adlerstr. 54, 4000 Düsseldorf. Diese Aktiv-Kohle liegt in Stäbchenform (2 bis 6 mm Länge; 0,8 mm Durchmesser) vor. Ganz besonders bewährt hat sich der Einsatz von drei Aktiv-Kohle-Schüttungan. Hierbei werden zwei Schüttungen hintereinander betrieben, während die dritte Schüttung regeneriert wird.

Bei den hintereinander geschalteten Schüttungen ist eine frisch regenerierte Schüttung der teilweise beladenen Schüttung nachgeschaltet.

Die Beispiele erläutern die vorgelegte Erfindung.

Beispiel 1

Mittels einer Kreiselpumpe wurden aus einem Vorratsbehälter 10 m³/h vorgereinigte Naßphosphorsäure in einen mit Polytetrafluorethylen ausgekleideten, geschlossenen 15 m³-Behälter gefördert. Gleichzeitig wurden 100 kg/h Wasserstoffperoxid (30 % $H_2O_2$) in den Saugstutzen der Kreiselpumpe dosiert. Die vorgereinigte Naßphosphorsäure hatte eine Temperatur von 145°C und folgende analytischen Daten:

3

| P$_2$O$_5$ | 61,9 Gew% |
|---|---|
| Schwermetalle | < 1 ppm |
| CaO | < 5 ppm |
| F | 3 ppm |
| flüchtige Säuren, ber. als CH$_3$COOH | 35 ppm |
| SO$_4$ | 150 ppm |
| C | 75 ppm |
| Transmission | 82 % in 1 cm Küvette; 37,3 % in 5 cm Küvette. |

Der Druckstutzen der Kreiselpumpe endete 100 mm oberhalb des Bodens des 15 m$^3$-Behälter. Durch einen im oberen Drittel angebrachten Überlaufsyphon wurde ein Füllvolumen von 12 m$^3$ in dem 15 m$^3$-Behälter eingehalten.

Die überlaufende Naßphosphorsäure (10 m$^3$/h) wurde sodann in einem Graphitkühler auf 90°C abgekühlt und über zwei hintereinander geschaltete Aktiv-Kohle- Siliciumcarbid-Schüttungen, die jeweils in einem 15 m$^3$-Behälter von 2200 mm Durchmesser angeordnet waren, geleitet.

In dem 15 m$^3$-Behälter war ein Tragrost aus Graphit angeordnet, auf dem sich eine 80 mm hohe Siliciumcarbid-Schüttung der Körnung 5 bis 8 mm befand. Auf der Siliciumcarbid-Schüttung war eine 3500 mm hohe Aktiv-Kohle-Schüttung aus stäbchenförmigen ® Norit ROX 0,8 (2 bis 6 mm Länge; 0,8 mm Durchmesser) aufgebracht. Die nachgeschaltete Aktiv-Kohle-Schüttung war frisch regeneriert; durch die vorgeschaltete Aktiv-Kohle-Schüttung waren bereits insgesamt 25000 m$^3$ Naßphosphorsäure aus früheren Chargen geflossen. Hierbei wurde die jetzt vorgeschaltete Aktiv-Kohle-Schüttung als nachgeschaltete Aktiv-Kohle-Schüttung betrieben. Durch eine geeignete Syphonanordnung wurde dafür Sorge getragen, daß die zu filtrierende Naßphosphorsäure unter Luftausschluß mit der Aktiv-Kohle kontaktiert wurde. In der erhaltenen Naßphosphorsäure wurden < 4 ppm C ermittelt; die Transmission betrug 96,5 % in der 5 cm Küvette; 99,3 % in der 1 cm Küvette. Auch nach 4 Wochen Standzeit war keine Veränderung in der Transmission eingetreten. Die gereinigte Naßphosphorsäure war völlig geruchsfrei. Der Gehalt an flüchtigen Säuren, ber. als CH$_3$COOH, betrug 5 ppm.

Beispiel 2

Es wurde entsprechend wie im Beispiel 1 verfahren mit dem Unterschied, daß jetzt die vorgereinigte Naßphosphorsäure in dem 15 m$^3$-Behälter mittels einer Kreiselpumpe umgepumpt wurde. Der Druckstutzen der Kreiselpumpe war bis kurz unter den Flüssigkeitsspiegel geführt. Die mit der Kreiselpumpe umgewälzte Naßphosphorsäure-Menge betrug 250 m$^3$/h. Die Naßphosphorsäure wurde durch ein Bodenventil des 15 m$^3$-Behälters dem Saugstutzen der Kreiselpumpe zugeführt. Aus der umgewälzten Naßphosphorsäure wurden 10 m$^3$/h in einem Graphitkühler auf 85°C abgekühlt und durch zwei hintereinander betriebene Aktiv-Kohle-Schüttungen gefördert. In den Saugstutzen der Kreiselpumpe wurden 100 kg/h Wasserstoffperoxid (30 % H$_2$O$_2$) dosiert. Die aus dem Vorratsbehälter entnommene vorgereinigte Naßphosphorsäure hatte eine Temperatur von 140°C und folgende analytischen Daten:

| P$_2$O$_5$ | 61,6 Gew% |
|---|---|
| Schwermetalle | < 1 ppm |
| CaO | < 5 ppm |
| F | 4 ppm |
| flüchtige Säuren, ber. als CH$_3$COOH | 40 ppm |
| SO$_4$ | 170 ppm |
| C | 95 ppm |
| Transmission | 78,3 % in 1 cm Küvette; 29,4 % in 5 cm Küvette. |

Die gereinigte Naßphosphorsäure enthielt < 4 ppm C; die Transmission betrug 96,6 % in der 5 cm Küvette; 99,3 % in der 1 cm Küvette. Nach 4 Wochen Standzeit betrug die Transmission 96,5 % in der 5 cm Küvette; 99,3 % in der 1 cm Küvette. Die Naßphosphorsäure war völlig geruchsfrei. Der Gehalt an flüchtigen Säuren, bar. als CH$_3$COOH, betrug 4 ppm.

**Patentansprüche**

4

EP 0 330 917 B1

1. Kontinuierliches Verfahren zur vollständigen Entfernung organischer Verunreinigungen und vollständigen Entfärbung von vorgereinigter Naßphosphorsäure, welche durch ein Extraktionsverfahren mittels eines organischen Lösemittels gereinigt, mittels Dampfstrippung von restlicher Fluorwasserstoffsäure befreit und mit Wasserstoffperoxid bei erhöhter Temperatur behandelt wurde, dadurch gekennzeichnet, daß man in einer Mischzone die vorgereinigte Naßphosphorsäure und das Wasserstoffperoxid bei einer Temperatur von 100 bis 200°C, vorzugsweise 140 bis 160°C, vermischt und 1 bis 4 Stunden bei dieser Temperatur nachreagieren läßt, die so behandelte vorgereinigte Naßphosphorsäure auf 85 bis 90°C abkühlt und bei dieser Temperatur unter Luftausschluß zunächst durch eine Aktiv-Kohle-Schüttung, die auf Basis Torf hergestellt und dampfaktiviert ist und eine BET-Oberfläche von 800 bis 1000 m$^2$/g aufweist, und anschließend durch eine Siliciumcarbid- und/oder Graphit-Schüttung fördert und dabei eine Fördergeschwindigkeit von weniger als 0,5 m$^3$/h Naßphosphorsäure je m$^3$ Aktiv-Kohle-Schüttung eingehalten wird.

2. Verfahren nach Anspruch 1, dadurch gekennzeichnet, daß das Wasserstoffperoxid in den Saugstutzen einer Kreiselpumpe, mit welcher die vorgereinigte Naßphosphorsäure gepumpt wird, eindosiert wird.

3. Verfahren nach Anspruch 1 oder 2, dadurch gekennzeichnet, daß 5 bis 30 kg 30 %iges Wasserstoffperoxid pro m$^3$ Naßphosphorsäure eindosiert werden.

4. Verfahren nach einem der Ansprüche 1 bis 3, dadurch gekennzeichnet, daß unter 0,4 m$^3$/h, insbesondere 0,3 bis 0,35 m$^3$/h Naßphosphorsäure pro m$^3$ Aktiv-Kohle-Schüttung fließen.

5. Verfahren nach einem der Ansprüche 1 bis 4, dadurch gekennzeichnet, daß die Aktiv-Kohle-Schüttung auf der Siliciumcarbid- und/oder Graphit-Schüttung in einem Behälter gemeinsam angeordnet ist.

6. Verfahren nach einem der Ansprüche 1 bis 5, dadurch gekennzeichnet, daß die Aktiv-Kohle-Schüttung und Siliciumcarbid- und/oder Graphit-Schüttung zur Erzielung hoher Standzeiten mit der erfindungsgemäß gereinigten Naßphosphorsäure rückgespült werden.

## Claims

1. A continuous process for complete removal of organic impurities and complete decolorization of pre-purified wet-process phosphoric acid which has been purified by an extractive method using an organic solvent, freed from residual hydrofluoric acid by steam stripping and treated with hydrogen peroxide at elevated temperature, which comprises mixing the pre-purified wet-process phosphoric acid and the hydrogen peroxide in a mixing zone at a temperature of from 100 to 200°C, preferably 140 to 160°C, and allowing them to react at this temperature for a further 1 to 4 hours, cooling to from 85 to 90°C the pre-purified wet-process phosphoric acid treated in this way and pumping it at this temperature with exclusion of air firstly through an activated charcoal bed which has been prepared on the basis of peat and has been steam-activated and has a BET surface area of from 800 to 1000 m$^2$/g, and subsequently through a silicon carbide and/or graphite bed, while maintaining a pumping rate of less than 0.5 m$^3$/h of wet-process phosphoric acid per m$^3$ of activated charcoal bed.

2. The process as claimed in claim 1, wherein the hydrogen peroxide is metered into the intake port of a centrifugal pump by means of which the pre-purified wet-process phosphoric acid is pumped.

3. The process as claimed in claim 1 or 2, wherein from 5 to 30 kg of 30 % strength hydrogen peroxide are metered in per m$^3$ of wet-process phosphoric acid.

4. The process as claimed in any of claims 1 to 3, wherein less than 0.4 m$^3$/h, in particular 0.3 to 0.35 m$^3$/h, of wet-process phosphoric acid flow per m$^3$ of activated charcoal bed.

5. The process as claimed in any of claims 1 to 4, wherein the activated charcoal bed is arranged on the silicon carbide and/or graphite bed in a common container.

6. The process as claimed in any of claims 1 to 5, wherein, in order to achieve long service lives, the activated charcoal bed and the silicon carbide and/or graphite bed are backwashed with wet-process

5

phosphoric acid purified according to the invention.

**Revendications**

1. Procédé continu d'élimination totale d'impuretés organiques et de décoloration totale d'acide phosphorique préparé par voie humide, préalablement purifié, qui a été purifié par un procédé d'extraction au moyen d'un solvant organique, débarrassé de l'acide fluorhydrique résiduel par réextraction à la vapeur et traité à haute température à l'aide de peroxyde d'hydrogène, caractérisé en ce qu'on mélange l'acide phosphorique préparé par voie humide, préalablement purifié, et le peroxyde d'hydrogène dans une zone de mélange, à une température de 100 à 200°C, de préférence de 140 à 160°C, et qu'on laisse la réaction se dérouler à cette température pendant 1 à 4 h, qu'on refroidit l'acide phosphorique préparé par voie humide, préalablement purifié, ainsi traité, à 85 à 90°C et qu'on le transporte à cette température, à l'abri de l'air, tout d'abord à travers une masse en vrac de charbon actif préparé à base de tourbe et activé à la vapeur et ayant une surface BET de 800 à 1000 $m^2$/g et ensuite à travers une masse en vrac de carbure de silicium et/ou de graphite et qu'on respecte ce faisant une vitesse de transport de moins de 0,5 $m^3$/h d'acide phosphorique préparé par voie humide par $m^3$ de masse en vrac de charbon actif.

2. Procédé selon la revendication 1, caractérisé en ce qu'on introduit de façon dosée le peroxyde d'hydrogène dans la tubulure d'aspiration d'une pompe centrifuge qui transvase l'acide phosphorique préparé par voie humide préalablement purifié.

3. Procédé selon la revendication 1 ou 2, caractérisé en ce qu'on introduit de façon dosée 5 à 30 kg de peroxyde d'hydrogène à 30% par $m^3$ d'acide phosphorique préparé par voie humide.

4. Procédé selon l'une des revendications 1 à 3, caractérisé en ce que moins de 0,4 $m^3$/h, notamment 0,3 à 0,35 $m^3$/h d'acide phosphorique préparé par voie humide s'écoule par $m^3$ de masse en vrac de charbon actif.

5. Procédé selon l'une des revendications 1 à 4, caractérisé en ce que la masse en vrac de charbon actif est disposée sur la masse en vrac de carbure de silicium et/ou de graphite dans un récipient commun.

6. Procédé selon l'une des revendications 1 à 5, caractérisé en ce que la masse en vrac de charbon actif et la masse en vrac de carbure de silicium et/ou de graphite est lavée à contre-courant à l'aide de l'acide phosphorique préparé par voie humide, purifié selon l'invention, en vue de l'obtention de temps de séjour supérieurs.